Europäisches Patentamt

European Patent Office

Office européen des brevets

(19)

(11) **EP 1 012 640 B1**

(12) ## EUROPEAN PATENT SPECIFICATION

(45) Date of publication and mention
of the grant of the patent:
**04.08.2004 Bulletin 2004/32**

(51) Int Cl.7: **G02B 27/28**, G02B 5/30,
G02B 5/32

(21) Application number: **97910813.1**

(22) Date of filing: **03.10.1997**

(86) International application number:
**PCT/US1997/018036**

(87) International publication number:
**WO 1998/015854 (16.04.1998 Gazette 1998/15)**

(54) **DEVICE FOR THE ELIMINATION OF THE ZERO ORDER BEAM EMERGING FROM A HOLOGRAM ILLUMINATED IN POLARIZED LIGHT**

VORRICHTUNG ZUR UNTERDRÜCKUNG DES STRAHLS NULLTER ORDNUNG VON EINEM MIT POLARISIERTEM LICHT BELEUCHTETEN HOLOGRAMMS

DISPOSITIF POUR SUPPRIMER LE FAISCEAU D'ORDRE ZERO EMERGEANT D'UN HOLOGRAMME ECLAIRE DANS LA LUMIERE POLARISEE

(84) Designated Contracting States:
**DE FR GB NL**

(30) Priority: **08.10.1996 FR 9612248**
**08.10.1996 RU 96120355**

(43) Date of publication of application:
**28.06.2000 Bulletin 2000/26**

(73) Proprietor: **CORNING INCORPORATED**
**Corning, N.Y. 14831 (US)**

(72) Inventors:
• **DAHMANI, Brahim**
**F-92120 Montrouge (FR)**
• **KORZININ, Yuri**
**St.Petersbourg, 199031 (RU)**
• **SUKHANOV, Vitaly, I.**
**St.Petersbourg, 193130 (RU)**

(74) Representative: **Boon, Graham Anthony**
**Elkington and Fife LLP,**
**Prospect House,**
**8 Pembroke Road**
**Sevenoaks, Kent TN13 1XR (GB)**

(56) References cited:
**EP-A- 0 349 884       EP-A- 0 583 150**
**EP-A- 0 715 190       WO-A-96/12373**
**US-A- 3 682 526       US-A- 4 407 566**
**US-A- 4 807 978       US-A- 4 810 047**
**US-A- 4 882 619       US-A- 5 526 145**

• **PATENT ABSTRACTS OF JAPAN, Vol. 12, No. 185, 31 May 1988; & JP,A,62 293 223 (SAKATA HAJIME).**
• **PATENT ABSTRACTS OF JAPAN, Vol. 18, No. 7, 07 January 1994; & JP,A,05 249 318 (HIDEFUMI SAITO).**
• **PATENT ABSTRACTS OF JAPAN, Vol. 15, No. 79, 25 February 1991; & JP,A,02 296 213 (KEIJI JINGU).**

EP 1 012 640 B1

**Description**

The present invention relates to a device for the elimination of the zero order beam emerging from a hologram illuminated in polarized light and more particularly to a video image projector equipped with such a device.

The functions of numerous conventional optical components, lenses, filters, etc., can today be produced by means of holograms which have various advantages, particularly those of having a planar shape which does not require much space and of being inexpensive to manufacture.

However, the functioning of a hologram, as that of any optics calling for diffraction of light, is a function of the wavelength of this light. When an incident beam of white light illuminates a hologram, this dependency is at the origin of the passage of the latter by a beam called "zero order" beam which is not diffracted and therefore not deflected, in contrast to the beam diffracted by the hologram. The presence of these two beams coming out of the hologram can have the effect of contaminating the beam of diffracted light with the white light of the non-diffracted beam. This is the case in particular when the hologram produces three beams of red, green ad blue light respectively, for example, for the projection of video images in color, the zero order beam, composed of white light, affects the purity of the colors.

In order to avoid this disadvantage, it is possible to manufacture the hologram in such a way that the usable diffracted beams diverge angularly to a greater extent from the axis of the zero order beam, or to use the diffracted beams a long distance from the hologram, where these beams are sufficiently separated spatially so that the objects which they illuminate cannot also receive the light of the zero order beam.

This solution unfortunately leads to very bulky assemblies, which are obviously not suitable in apparatuses such as, for example, the video image or television projectors intended for the general public, of which the space requirement must be as small as possible.

The present invention therefore aims to produce a device for elimination of the zero order beam emerging from a hologram illuminated in white light, which is both effective and has a small space requirement.

US 4,810,047 describes a holographic lens system for producing a focused beam of light. A holographic lens produces zero order and diffracted beams of light, which are passed through a polarization rotator which rotates each of these beams by different amounts. An attenuator attenuates the zero order beam.

SUMMARY OF THE INVENTTON

In accordance with the invention, there is provided a device as set out in claim 1.

The present invention also aims to produce a video image projector equipped with such a device.

These aims of the invention are reached, as are others which will appear upon reading of the following description, with a device for elimination of the zero order beam emerging from a hologram illuminated in polarized light, this device being remarkable in that it includes a) a plate made of a birefringent material illuminated by said beam and the diffracted beam which emerges from the hologram, this plate being arranged and sized in such a way that one of the beams emerges from the plate without its plane of polarization having undergone appreciable rotation, which the plane of polarization of the other has undergone a rotation, of 90°, and b) a polarizer illuminated by the two beams which emerge from the birefringent plate, the plane of maximum transmittance of this polarizer being parallel to the plane of polarization of the beam which emerges from the birefringent plate from the beam diffracted by the hologram.

This plane of maximum transmittance is perpendicular to the plane of polarization of the other beam of zero order, which emerges from the birefringent plate, so that the zero order beam is extinguished by the polarizer.

Since the hologram, the birefringent plate, and the polarizer can be very close to one another or even attached, one sees that the elimination of the zero order beam occurs in a very small volume.

The invention thus makes it possible to produce a video image projector with a small space requirement, the images being formed in an active matrix of liquid crystal cells each passed through by a polarized light beam emerging from a hologram. The projector is remarkable in that it includes a device, according to the invention, for elimination of the zero order beam emerging from said hologram.

DETAILED DESCRIPTION OF THE DRAWINGS

- Figure 1 is a diagram of the device according to the invention,
- Figure 2 is a diagram of the optical system of a video image projector equipped with the device according to the invention, and
- Figure 3 is a diagram of a variant of the optical system represented in Figure 2.

DETAILED DESCRIPTION OF THE INVENTION

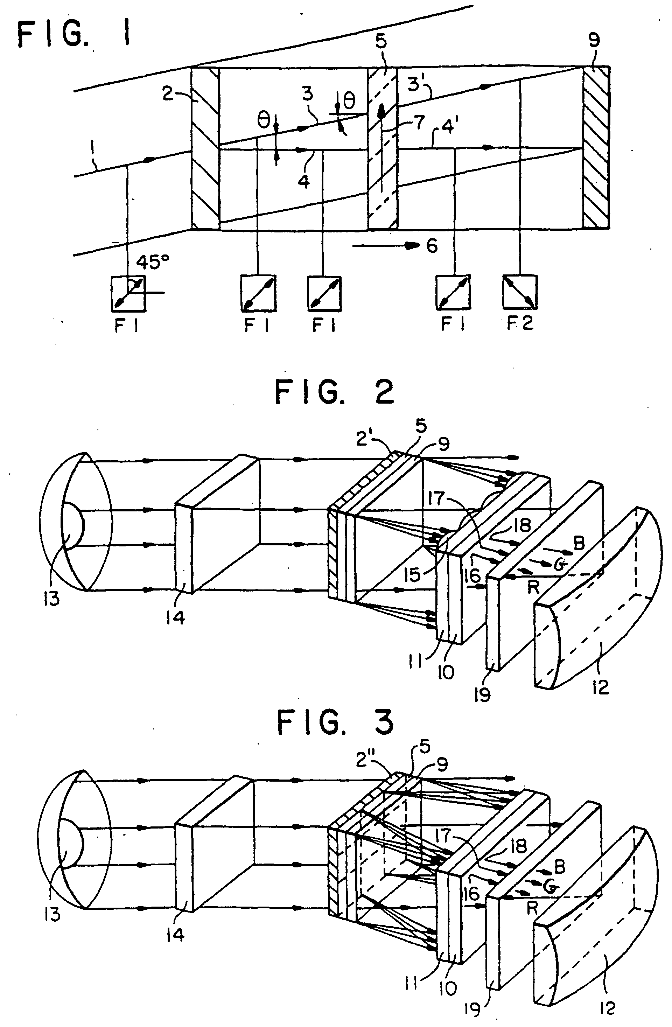

Reference is made to Figure 1 of the appended drawing in which the device according to the invention has been represented diagrammatically in axial section. This invention includes a source (not represented) of a beam with axis 1 (or beam 1) of light with planar polarization, incident on hologram 2 from which emerges a beam with axis 3 (or beam 3) of zero order, not deflected by the hologram, and a beam with axis 4 (or beam 4), which is diffracted and therefore deflected.

The device also includes plate 5 made of a birefringent material, arranged in such a way as to intercept the two beams 3 and 4, which, coming out of hologram 2, have the same planar polarization with orientation marked by the double arrow $F_1$, at 45° with respect to the plane of Figure 1.

Advantageously, according to the invention, the hologram is designed and produced so that usable diffracted beam 4, which carries out some optical treatment of incident beam 1, emerges perpendicular to the hologram and illuminates plate 5 at normal incidence. As will be seen further on, this characteristic makes it possible to give the device, according to the invention, maximum compactness.

Birefringent plate 5 which is used is uniaxial, with high- speed axis 6 normal to its two end surfaces, or with high-speed axis 7 parallel to these surfaces. In the case of a plate with axis 6 parallel to beam 4 diffracted by the hologram, one sees that the plate does not influence the orientation of the plane of polarization of the light of this beam, which thus emerges from plate 5 (beam 4') with a polarization of unchanged orientation, as diagrammed by the double arrow $F_2$ marking this orientation.

In contrast, the angle of incidence of the zero order beam 3' on plate 5 is equal to the angle θ of diffraction, which separates the two beams emerging from hologram 2. The beam is propagated then in the thickness of the plate making an angle β such that, according to the second law of Descartes:

$$\beta = \arcsin\left(\frac{\sin\theta}{n_0}\right)$$

$n_0$ being the ordinary index of plate 5.

It is known that while plate 5 introduces, between the two components TE and TM of beam 3, a phase shift $\theta_{TE}$-$\theta_{TM}$ such that:

$$\theta_{TE} - \theta_{TM} = [2\pi d/\lambda\cos\beta] \cdot [n_0 - (n_0^2\cos^2\beta + n_o^2\sin^2\beta)^{\frac{1}{2}}]$$

λ being the wavelength of the light, $n_e$ and d the extraordinary refractive index and the thickness, respectively, of plate 5.

If one assumes now that the planar polarization of beam 3 is such that the electric vector of the radiation is inclined 45° with respect to the plane of incidence of the beam, as diagrammed in Figure 1, the components TE and TM of the zero order beam 3 have equal intensities, and the plane of polarization of beam 3 rotates 90° in its passage through plate 5 if:

$$\theta_{TE} - \theta_{TM} - \pi$$

that is to say, introducing this condition in equation (2) above, if:

$$2d[n_0(n_0^2\cos^2\beta + n_o\sin^2\beta)^{\frac{1}{2}}] = \lambda\cos\beta$$

By choosing the thickness d of the plate and the angle θ of diffraction of the hologram in such a way that equation (3) is satisfied, the planes of polarization of the two beams 3' and 4' which emerge from plate 5 are oriented at an angle of 90° with respect to one another.

According to the invention, these beams are intercepted by a conventional polarizer 9 oriented in such a way that its plane of maximum transmittance is oriented parallel to the direction of double arrow $F_1$, so that this polarizer transmits diffracted beam 4'. The polarizer simultaneously absorbs the zero order beam 3 whose plane of polarization, marked by arrow $F_2$, is oriented at 90° with respect to that of the diffracted beam. The light which emerges from the polarizer is then completely rid of the zero order beam.

It should be noted that thanks to their parallel nature, obtained by the orientation, according to the invention, of diffracted beam 4 perpendicularly to the plane of the hologram and to that of plate 5, hologram 2, plate 5, and polarizer 9 can be attached to one of the other two elements, or all together, which gives the device a very small space requirement, in accordance with one of the aims set forth for the present invention.

If the axis of plate 5 is oriented according to arrow 7, parallel to the end surfaces of the plate and at 45°, with respect to the plane of polarization of the incident light hitting this plate, the same difference of 90° is established between the planes of polarization of beams 3' and 4' which emerge from this plate, by choosing d and θ so that the following equation is satisfied:

$$2(n_e - n_o)d = \lambda\cos\beta/(1-\cos\beta)$$

with β verifying the equation (1) above.

The transmitted zero order beam 3' is absorbed as explained in the preceding section.

A device according to the characteristics disclosed above was produced. Measurements showed that the device makes it possible to reduce, by at least 400 times, the intensity of the zero order beam, whose influence on the usable light beam then becomes negligible.

Plate 5 of the device according to the invention can be produced using various birefringent materials which are well known in the technique. It can, for example, be a plate called a "half-wave" plate produced out of a uniaxial crystal, or a plate of mica, suitably cut. It is also possible to use a birefringent polymer film such as a drawn polyvinyl alcohol film, a liquid crystal cell, or else a plate made of an optically active material as described in the work entitled "Optical waves in crystal", authors: A. Yariv, P. Yech, New York, Wiley International Publications, 1984. It is also possible to use, according to the invention, a plate made of a birefringent porous glass, such as one of those described in the work entitled "Phase separation in glass" prepared by O.V. Mazurin and E.A. Porai-Koshits, published in 1984 by North-Holland (Amsterdam, Oxford, New York, Tokyo).

The plates produced by cutting a birefringent crystal such as mica are expensive from the standpoint of the price of the crystal itself as well as the cost of cutting it, which must be precise. In order to reduce the cost of plate 5, it is possible to use birefringent polymer films, but they have the disadvantage of a high level of diffusion of the light and mechanical and physical properties which are subject to deterioration.

This is why, according to the invention, one will preferably use porous glass in order to form plate 5. Porous glass has the stability of glass and substantial birefringence (see the aforementioned work of Mazurin et al., and a work edited under the directorship of B.G. Varshal entitled "Biphasic glasses: structure, properties, applications", published by Academie des Sciences de l'URSS [Academy of Sciences of the USSR], Leningrad, 1991. Experiments have shown that it is possible to produce a porous glass with low dispersion and a birefringence characterized by a value $|n_o - n_e|$ of approximately $1.3.10^{-3}$ [sic: $1.3 \times 10^{-3}$]. It is then possible to produce plate 5, with a thickness of approximately 1 mm, out of such a porous glass with no great restriction on the precision of machining the surfaces of the plate, which further reduces the price of such a plate, which is produced out of an inexpensive material.

As an illustrative and non-limiting example of the present invention, its application to the projection of video images or of television will now be described in connection with Figures 2 and 3 of the appended drawing. One finds again in these figures hologram 2 (or 2', or 2"), birefringent plate 5, and polarizer 9 of the device according to the invention.

Figure 2 diagrammatically represents the optical system of a projector of video images displayed on a panel consisting of rectangular matrix 10 of liquid crystal cells which are controlled electrically (not represented), the different cells of the matrix being delimited by opaque mask 11 (called "black matrix") attached to it. It is therefore a matter of projecting a real image of the real image displayed by matrix 10 on a projection screen (not represented) using a projection objective 12 which picks up the displayed image again. For this purpose, one projects, in a known manner, polarized light through each liquid crystal cell of matrix 10, these cells acting selectively as light shutters. The light comes from source 13 of white light, which passes through analyzer 14 which gives it a planar polarization. Advantageously, this analyzer can be replaced by a light converter as described in the French patent application filed today by the applicant, entitled "Converter of natural white light into light with planar polarization", this converter preventing any loss of luminous energy coming from source 13.

The light thus polarized is received by hologram 2'. According to an arrangement known through the publication entitled "Compact spatio-chromatic single LCD Projection Architecture" by B.H. Loiseaux et al., published under the reference 57-4 on pages 87 and 88 of the transactions of the Conference Asia Display *95 which was held in Hiroshima, Japan, this hologram produces a number of triplets of beams respectively of red R, green G, and blue B light, the beams of each triplet being focused by a microlens of grid 15 of such microlenses on three adjacent cells 16, 17, 18 of matrix 10, which define one of the pixels of the image to be projected. Of course, as appears in the diagram of Figure 1, the beams emitted by hologram 2 pass through birefringent plate 5 and polarizer 9 which are suitably oriented in order to absorb, according to the invention, the zero order beam which has passed through the hologram, so that this beam does not illuminate grid 15 of micro-lenses which focus these beams.

The electronic control of the cells of the matrix selectively unblocks the passage of the light through polarizer 19 arranged in front of objective 12, this polarizer being oriented in such a way as to block normally the passage of this light, according to a conventional mode of functioning of a matrix with liquid crystal cells.

It should be noted that plate 2', plate 5 and polarizer 9 are attached to one another in a particularly compact manner.

Reference is now made to Figure 3 of the appended drawing, representing another embodiment of the optical system of a video image projector which incorporates the device according to the invention. In this figure, numerical references identical to references used in Figure 2 mark identical or similar elements. Thus, one finds again in the optical system of Figure 3, elements 5, 9, 10, 11, 12, 13, 14, 16, 17, 18 and 19 defined above. In fact, the optical system of Figure 3 is distinguished from that of Figure 2 by the contents of hologram 2" which is attached to birefringent plate 5 and by the absence of the grid of micro-lenses 15 of the system of Figure 2.

In the publication entitled "Holographic optical element for liquid crystal projectors" by N. Ichikawa, referenced S32-1 in the transactions of the Conference Asia Display 95 mentioned in the preceding, the structure and functioning of a hologram suitable for making up hologram 2" is described. Also described there is a process for manufacturing this hologram. It is made up of a number of grids, each associated with one of the triplets of red, green and blue cells making up a pixel of liquid crystal matrix 10. Each grid diffracts the incident light in such a way as to form three beams, red, green and blue respectively, which are focused each on the corresponding cell 16, 17, 18 of the triplet. Grid 15 of micro-lenses of the device of Figure 2 then becomes unnecessary.

It should be noted that components 2", 5, 9, 11, and 10 which are all planar can be attached to one another, which gives the optical system very great compactness, in accordance with one of the essential objectives sought by the present invention.

Of course, the invention is not limited to the embodiments described and represented which were only given as examples.

**Claims**

1. A device for elimination of the zero order beam (3) emerging from hologram (2; 2'; 2") illuminated in polarized light, comprising:

    a source for producing a beam (1) along an axis;
    a hologram (2) in the path of the beam (1) producing a zero order beam (3) not deflected by the hologram and a diffracted beam (4);
    a plate (5) made of a birefringent material illuminated by said zero-order beam (3) and the diffracted beam (4) which emerges from the hologram (2; 2'; 2"), and
    a polarizer (9) illuminated by the two beams which emerge from birefringent plate (5);

    **characterized in that** the diffracted beam (4) is substantially perpendicular to the hologram and illuminates plate (5) at normal incidence;
    **in that** said plate (5) is arranged and sized in such a way that one of the zero order and diffracted beams emerges from plate (5) without its plane of polarization having undergone appreciable rotation while the plane of polarization of the other beam has undergone a rotation of 90°; and
    **in that** the plane of maximum transmittance of this polarizer (9) is parallel to the plane of polarization of beam (4') which emerges from the birefringement plate from beam (4) diffracted by the hologram (2; 2'; 2");

2. A device according to Claim 1, **characterized by** the fact that plate (5) is made of a uniaxial birefringent material, said axis (6) being perpendicular to the surface of plate (5) whose ordinary refractive index ($n_o$) and extraordinary refractive index ($n_e$) are connected with the thickness (d) of the plate and with the angle of diffraction $\theta$ of the hologram by the equations:

$$2d\left[n_o - \left(n_o^2 \cos^2\beta + n_e^2 \sin^2\beta\right)^{1/2}\right] = \lambda \cos\beta$$

and

$$\beta = \arcsin (\sin \theta / n_o)$$

3. A device according to Claim 1 or to Claim 2, **characterized by** the fact that plate (5) made of birefringent material consists of porous glass.

4. A device according to Claim 1, **characterized by** the fact that plate (5) made of birefringent material is uniaxial, said axis (7) being parallel to the surface of plate (5) and oriented at an angle of 45° with respect to the plane of polarization of the incident beams hitting plate (5), the ordinary refractive index ($n_o$) and extraordinary refractive index ($n_e$) being connected with the thickness (d) of the plate and with the angle of diffraction θ of the hologram by the equations:

$$2(n_o - n_e)d = \lambda \cos\beta / (1 - \cos \beta)$$

$$\beta = \arcsin (\sin \theta / n_o)$$

5. A device according to any one of Claims 1-4, **characterized by** the fact that at least two of the elements of the group formed by: hologram (2; 2'; 2"), birefringent plate (5), and polarizer (9) are attached together.

6. A device according to any preceding claim further comprising an active matrix (10) of liquid crystal cells, each passed through by beam of polarized light emerging from hologram (2'; 2").

7. A device according to Claim 6, **characterized by** the fact that hologram (2') diffracts a triplet of beams (R, G, B) of light of each of the primary colors (R, G, B), on each of the optical micro-lenses of grid (15) of such lenses attached to matrix (10) in order to illuminate triplets of cells (16, 17, 18) associated with a particular pixel of the image to be projected.

8. A device according to Claim 6, **characterized by** the fact that hologram (2") is made up of an assembly of a number of diffraction grids, each of which diffracts and focuses three light beams of one of the three primary colors (R, G, B) respectively, on three cells (16, 17, 18) associated with a particular pixel of the image to be projected.

9. The device of any preceding claim wherein the source of polarized light produces white light.


**Patentansprüche**

1. Vorrichtung zur Eliminierung des Strahls nullter Ordnung (3), der von einem mit polarisiertem Licht beleuchteten Hologramm (2; 2'; 2") ausgeht und folgendes umfasst:

eine Quelle zur Erzeugung eines Strahls (1) längs einer Achse;
ein Hologramm (2) im Verlauf des Strahls (1), welches einen nicht vom Hologramm (2) abgelenkten Strahl nullter Ordnung (3) und einen gebeugten Strahl (4) erzeugt;
eine aus einem doppeltbrechendem Material hergestellte Platte (5), welche von diesem Strahl nullter Ordnung (3) und dem gebeugten, aus dem Hologramm (2; 2'; 2") hervorgehenden Strahl (4) beleuchtet wird; und
einen Polarisator (9), welcher von den beiden Strahlen beleuchtet wird, die aus der doppeltbrechenden Platte (5) hervorgehen;

**dadurch gekennzeichnet, dass** der gebeugte Strahl (4) im Wesentlichen rechtwinklig zum Hologramm ist und die Platte (5) in normalem Einfall beleuchtet;
dass die Platte (5) dergestalt angeordnet und ausgebildet ist, dass von dem Strahl nullter Ordnung und von dem gebeugten Strahl einer aus der Platte (5) hervorgeht, dessen Polarisationsebene keiner nennenswerten Rotation unterzogen wurde, wohingegen die Polarisationsebene des anderen Strahls einer Rotation von 90° unterzogen wurde; und
dass die Ebene der größten Transparenz dieses Polarisators (9) parallel zu der Polarisationsebene des Strahls (4') ist, welcher aus der doppeltbrechenden Platte (5) aus dem vom Hologramm (2; 2'; 2") gebeugten Strahl (4) hervorgeht.

**2.** Vorrichtung nach Anspruch 1, **dadurch gekennzeichnet, dass** diese Platte (5) aus einem einachsigen doppeltbrechenden Werkstoff hergestellt ist, wobei diese Achse (6) rechtwinklig zur Oberfläche der Platte (5) angeordnet ist, deren normaler Brechungsindex ($n_0$) und spezieller Brechungsindex ($n_e$) mit der Dicke (d) der Platte und dem Beugungswinkel θ des Hologramms durch folgende Gleichungen im Zusammenhang steht:

$$2\,d\,[n_0 - (n_0^2 \cos^2 \beta + n_e^2 \sin^2 \beta)^{\frac{1}{2}}] = \lambda \cos \beta$$

und

$$\beta = \arcsin(\sin\theta / n_0)$$

**3.** Vorrichtung nach Anspruch 1 oder Anspruch 2, **dadurch gekennzeichnet, dass** diese aus doppeltbrechendem Werkstoff hergestellte Platte (5) aus porösem Glas besteht.

**4.** Vorrichtung nach Anspruch 1, **dadurch gekennzeichnet, dass** diese aus doppeltbrechendem Werkstoff hergestellte Platte (5) einachsig ausgebildet ist, wobei diese Achse (7) parallel zur Oberfläche der Platte (5) angeordnet und in einem Winkel von 45° in Bezug auf die Polarisationsebene der die Platte (5) treffenden einfallenden Strahlen ausgerichtet ist, wobei der normale Brechungsindex ($n_0$) und der spezielle Brechungsindex ($n_e$) mit der Dicke (d) der Platte und dem Beugungswinkel θ des Hologramms durch folgende Gleichungen im Zusammenhang steht:

$$2\,(n_0 - n_e)\,d = \lambda \cos \beta / (1 - \cos \beta)$$

und

$$\beta = \arcsin(\sin\theta / n_0)$$

**5.** Vorrichtung nach einem der Ansprüche 1 bis 4, **dadurch gekennzeichnet, dass** mindestens zwei der Elemente der Gruppe, die aus dem Hologramm (2; 2'; 2"), der doppeltbrechenden Platte (5) und dem Polarisator (9) besteht, aneinander angebracht sind.

**6.** Vorrichtung nach einem der vorstehenden Ansprüche, welche weiterhin eine aktive Matrix (10) aus Flüssigkristallzellen umfasst, wobei jede vom Strahl des polarisierten Lichts durchdrungen wird, welches vom Hologramm (2', 2") hervorgeht.

**7.** Vorrichtung nach Anspruch 6, **dadurch gekennzeichnet, dass** das Hologramm (2') eine Dreiergruppe von Lichtstrahlen (R, G, B) von jeder der Primärfarben (R, G, B) auf jede der optischen Mikrolinsen eines Gitters (15) von solchen Linsen beugt, die an der Matrix (10) angebracht sind, um Dreiergruppen von Zellen (16, 17, 18) zu beleuchten, welche zu einem bestimmten Pixel des zu projizierenden Bildes gehören.

**8.** Vorrichtung nach Anspruch 6, **dadurch gekennzeichnet, dass** das Hologramm (2") aus einem Zusammenbau einer Anzahl von Beugungsgitter gebildet ist, wobei jedes von diesen drei Lichtstrahlen von jeweils einer der drei Primärfarben (R, G, B) auf drei Zellen (16, 17, 18) hin beugt und fokussiert, welche zu einem bestimmten Pixel des zu projizierenden Bildes gehören.

**9.** Vorrichtung nach einem der vorstehenden Ansprüche, wobei die Quelle des polarisierten Lichts weißes Licht erzeugt.

**Revendications**

**1.** Un dispositif pour l'élimination du faisceau d'ordre zéro (3) émergeant d'un hologramme (2; 2'; 2") éclairé en lumière polarisée, comprenant :

une source propre à produire un faisceau (1) le long d'un axe ;

un hologramme (2) sur le trajet du faisceau (1) produisant un faisceau d'ordre zéro (3) non dévié par l'hologramme et un faisceau diffracté (4) ;

une lame (5) formée d'une matière biréfringente éclairée par ledit faisceau d'ordre zéro (3) et par le faisceau diffracté (4) qui émerge de l'hologramme (2; 2'; 2"), et

un polariseur (9) éclairé par les deux faisceaux qui émergent de la lame biréfringente (5) ;

**caractérisé en ce que** le faisceau diffracté (4) est sensiblement perpendiculaire à l'hologramme et éclaire la lame (5) sous une incidence normale ;

**en ce que** ladite lame (5) est disposée et dimensionnée de telle manière que l'un d'entre le faisceau d'ordre zéro et le faisceau diffracté émerge de la lame (5) sans que son plan de polarisation ait subi de rotation appréciable tandis que le plan de l'autre faisceau a subi une rotation de 90° ; et

**en ce que** le plan de transmission maximale du polariseur (9) est parallèle au plan de polarisation du faisceau (4') qui émerge de la lame biréfringente en provenant du faisceau (4) diffracté par l'hologramme (2; 2'; 2").

2. Un dispositif selon la revendication 1, **caractérisé en ce que** la lame (5) est formée d'un matériau biréfringent uniaxe, ledit axe (6) étant perpendiculaire à la surface de la lame (5) dont l'indice de réfraction ordinaire ($n_o$) et l'indice de réfraction extraordinaire ($n_e$) sont liés à l'épaisseur (d) de la lame et à l'angle de diffraction θ de l'hologramme par les relations :

$$2d[n_o-(n_o{}^2\cos^2\beta+n_e{}^2\sin^2\beta)^{1/2}] = \lambda \cos \beta$$

$$\beta = \arcsin[(\sin\theta)/n_o].$$

3. Un dispositif selon la revendication 1 ou la revendication 2, **caractérisé en ce que** la lame (5) en matériau biréfringent est constituée de verre poreux.

4. Un dispositif selon la revendication 1, **caractérisé en ce que** la lame (5) en matériau biréfringent est uniaxe, ledit axe (7) étant parallèle à la surface de la lame (5) et orienté de façon à former un angle de 45° avec le plan de polarisation des faisceaux incidents frappant la lame (5), l'indice de réfraction ordinaire ($n_o$) et l'indice de réfraction extraordinaire ($n_e$) étant liés à l'épaisseur (d) de la lame et à l'angle de diffraction θ de l'hologramme par les relations :

$$2(n_o - n_e)d = \lambda\cos\beta/(1 - \cos\beta)$$

$$\beta = \arcsin[(\sin\theta)/n_o].$$

5. Un dispositif selon l'une quelconque des revendications 1 à 4, **caractérisé en ce que** deux au moins des éléments du groupe formé par l'hologramme (2; 2'; 2"), la lame biréfringente (5) et le polariseur (9) sont mutuellement solidaires.

6. Un dispositif selon l'une quelconque des revendications précédentes, comprenant en outre une matrice active (10) de cellules à cristaux liquides, traversées chacune par un faisceau de lumière polarisée émergeant de l'hologramme (2'; 2").

7. Un dispositif selon la revendication 6, **caractérisé en ce que** l'hologramme (2') diffracte un triplet de faisceaux (R, V, B) de lumière de chacune des couleurs primaires (R, V, B) sur chacune des microlentilles optiques du réseau (18) de ces lentilles solidaire de la matrice (10) à l'effet d'éclairer des triplets de cellules (16, 17, 18) associés à un pixel particulier de l'image à projeter.

8. Un dispositif selon la revendication 6, **caractérisé en ce que** l'hologramme (2") est constitué d'un assemblage d'un certain nombre de réseaux de diffraction dont chacun diffracte et focalise trois faisceaux lumineux de l'une respective des trois couleurs primaires sur trois cellules (16, 17, 18) associées à un pixel particulier de l'image à projeter.

9. Le dispositif de l'une quelconque des revendications précédentes, dans lequel la source de lumière polarisée produit de la lumière blanche.

FIG. 1

FIG. 2

FIG. 3